# EUROPÄISCHE PATENTSCHRIFT

(11) **EP 2 189 240 B1**
(45) Veröffentlichungstag und Bekanntmachung des Hinweises auf die Patenterteilung: **23.11.2011**
(21) Anmeldenummer: 09012601.2
(22) Anmeldetag: 06.10.2009
(51) Int. Cl.: B23Q 15/16, B24B 7/17, B24B 7/22, B24B 49/00, B24B 37/04

(54) **Verfahren zum Betreiben einer Doppelseitenschleifmaschine sowie Doppelseitenschleifmaschine**
Method for operating a double sided grinding machine and double sided grinding machine
Procédé destiné au fonctionnement d'une meuleuse à double face et meuleuse à double face

(30) Priorität: 22.11.2008 DE 102008058638
(43) Veröffentlichungstag der Anmeldung: 26.05.2010
(73) Patentinhaber: Peter Wolters GmbH, 24768 Rendsburg (DE)
(72) Erfinder: Von Bechtolsheim, Conrad, 24787 Fockbek (DE)
(74) Vertreter: Hauck Patent- und Rechtsanwälte

(56) Entgegenhaltungen:
- EP-A- 0 344 548
- EP-A- 2 025 470
- JP-A- 2000 052 234
- US-A1- 2003 194 866
- US-A1- 2007 281 592

## Beschreibung

Die Erfindung betrifft ein Verfahren zum Betreiben einer Doppelseitenschleifmaschine zum Schleifen flacher Werkstücke, mit einer oberen und einer unteren Arbeitsscheibe, die jeweils eine Arbeitsfläche mit einem Schleifbelag aufweisen, wobei zwischen den Arbeitsflächen ein Arbeitsspalt gebildet ist, in dem die Werkstücke geschliffen werden, bei dem mindestens eine der Arbeitsscheiben über mindestens einen Antriebsmotor drehend angetrieben wird und in dem Arbeitsspalt geführte Werkstücke durch die Schleifbeläge geschliffen werden, wobei die Arbeitsscheiben eine Anpresskraft auf die Werkstücke ausüben.

Die Erfindung betrifft außerdem eine Doppelseitenschleifmaschine zum Schleifen flacher Werkstücke, mit einer oberen und einer unteren Arbeitsscheibe, die jeweils eine Arbeitsfläche mit einem Schleifbelag aufweisen, wobei zwischen den Arbeitsflächen ein Arbeitsspalt gebildet ist, in dem Werkstücke geschliffen werden können, mit mindestens einem Antriebsmotor, mit dem mindestens eine der Arbeitsscheiben drehend antreibbar ist, mit einer Einrichtung zum Führen der Werkstücke in dem Arbeitsspalt, und mit mindestens einer Anpresseinrichtung, mit der von den Arbeitsscheiben eine Anpresskraft auf die Werkstücke ausgeübt werden kann.

Die Schleifbeläge derartiger Doppelseitenschleifmaschinen und insbesondere ihre Schleifkörner unterliegen Verschleiß, insbesondere einer Abstumpfung, welche dazu führt, dass der Materialabtrag mit der Betriebsdauer der Schleifbeläge abnimmt. Wird die Anpresskraft der Arbeitsscheiben über die Betriebsdauer konstant gehalten, nimmt die für die zu schleifenden Werkstücke jeweils erforderliche Bearbeitungszeit entsprechend zu. Daher ist es auch bekannt, die Anpresskraft der Arbeitsscheiben mit der Betriebsdauer der Schleifbeläge zu erhöhen, um die Bearbeitungszeiten möglichst konstant zu halten. Erreicht der Arbeitsbelag allerdings einen kritischen Verschleiß, nehmen die dazu erforderlichen Anpresskräfte sehr hohe Werte an, so dass die Antriebsmotoren die Arbeitsscheiben nicht mehr ausreichend drehend antreiben können.

In beiden genannten Fällen ergibt sich somit eine Begrenzung der maximalen Anzahl an möglichen Bearbeitungsgängen mit den Werkzeugen. Im ersten Fall ist diese erreicht, sobald die Bearbeitungszeit nicht mehr akzeptabel ist. Im zweiten Fall ist sie erreicht, sobald die zulässige Leistung der Motoren überschritten wird. Bei Erreichen dieser maximalen Anzahl möglicher Bearbeitungsgänge müssen die Schleifbeläge geschärft bzw. ausgetauscht werden.

Ausgehend von dem erläuterten Stand der Technik liegt der Erfindung die Aufgabe zugrunde, ein Verfahren und eine Vorrichtung der eingangs genannten Art bereitzustellen, mit denen die Standzeit der Arbeitsscheiben und insbesondere ihrer Schleifbeläge gegenüber dem Stand der Technik erhöht ist.

Die Erfindung löst diese Aufgabe durch die Gegenstände der unabhängigen Ansprüche 1 und 4. Vorteilhafte Ausgestaltungen finden sich in den abhängigen Ansprüchen, der Beschreibung sowie den Figuren.

Für ein Verfahren der eingangs genannten Art löst die Erfindung die Aufgabe dadurch, dass während des Schleifvorgangs das von dem Antriebsmotor aufgebrachte Drehmoment gemessen und mit einem Solldrehmoment verglichen wird, und dass bei einer Abweichung des gemessenen Drehmoments von dem Solldrehmoment die Anpresskraft so eingestellt wird, dass das gemessene Drehmoment das Solldrehmoment annimmt.

Für eine Doppelseitenschleifmaschine der eingangs genannten Art löst die Erfindung die Aufgabe dadurch, dass diese weiterhin mindestens eine Messeinrichtung aufweist, mit der während des Schleifvorgangs das von dem Antriebsmotor aufgebrachte Drehmoment gemessen wird, sowie mindestens eine Vergleichseinrichtung, mit der das gemessene Drehmoment mit einem Solldrehmoment verglichen werden kann, und mindestens eine Regeleinrichtung, mit der bei einer Abweichung des gemessenen Drehmoments von dem Solldrehmoment die Anpresskraft so eingestellt werden kann, dass das gemessene Drehmoment das Solldrehmoment annimmt.

Erfindungsgemäß wird das Motordrehmoment als Regelgröße auf einen Sollwert geregelt. Dazu wird die Anpresskraft bzw. der Anpressdruck als Stellgröße so eingestellt, dass das Drehmoment jederzeit dem Sollwert entspricht. Dabei ist erkannt worden, dass bei einer Regelung auf ein konstantes Motormoment der Verschleiß der Schleifbeläge minimiert werden kann. So hat sich überraschend herausgestellt, dass mit der Erfindung im Vergleich zum Stand der Technik erheblich längere Standzeiten der Werkzeuge erreicht werden. Die Anpresskraft bewegt sich dabei in einem Bereich zwischen den aus dem Stand der Technik bekannten Extremen der konstanten Anpresskraft über die gesamte Standzeit einerseits, sowie der konstanten Bearbeitungszeit und entsprechend stark ansteigenden Anpresskraft andererseits. So kann die Anpresskraft erfindungsgemäß mit der Anzahl der mit den Arbeitsscheiben durchgeführten Bearbeitungsgänge zunehmen. Allerdings nimmt bei ansonsten gleichen Bearbeitungsparametern dann gleichzeitig auch die Bearbeitungszeit pro Werkstück mit der Anzahl der Bearbeitungsvorgänge zu. Auf diese Weise lässt sich die Anzahl der mit den Arbeitsscheiben bzw. Schleifbelägen durchführbaren Bearbeitungsvorgänge erhöhen. Im Gegensatz zu der bisherigen diesbezüglichen Lehre der Fachwelt wird durch die Erfindung die Wechselwirkung zwischen Schleifbelag, und insbesondere den einzelnen Schleifkörnern, sowie den Bearbeitungsparametern der Maschine derart berücksichtigt, dass der Verschleiß insgesamt minimiert wird. Gleichzeitig werden über eine größere Anzahl von bearbeiteten Werkstücken akzeptable Bearbeitungsdauern für einen gewünschten Materialabtrag der Werkstücke eingehalten.

Soweit in der Maschine getrennte Antriebsmotoren für die Arbeitsscheiben vorgesehen sind, ist es möglich, jeweils eine Messvorrichtung für jeden Motor vorzusehen und damit auf das Antriebsmoment des ersten oder des zweiten Motors zu regeln. Ebenso ist es möglich, auf eine Kombination der beiden einzelnen Drehmomentwerte zu regeln, beispielsweise einem Mittelwert, einer Summe oder dergleichen. Die Mess-, Vergleichs und Regeleinrichtungen der erfindungsgemäßen Vorrichtung können separate Einrichtungen sein. Es ist aber auch möglich, eine oder mehrere dieser Einrichtungen zu einer jeweiligen Einheit zusammenzufassen.

Die Werkstücke können beispielsweise Halbleiterscheiben (Wafer) sein, beispielsweise Silizium-Wafer. Es kommt aber selbstverständlich auch eine Vielzahl anderer Werkstücke in Frage, beispielsweise Werkstücke aus Stahl, Keramik oder anderen Materialien.

Gemäß einer Ausgestaltung können in dem Arbeitsspalt mehrere Läuferscheiben angeordnet sein, die in Ausnehmungen Werkstücke aufnehmen und mittels einer Abwälzvorrichtung in Rotation versetzt werden, wodurch die Läuferscheiben und damit die in ihnen aufgenommenen Werkstücke sich in dem Arbeitsspalt entlang einer zykloidischen Bahn bewegen. Eine solche Planetenanordnung hat sich in der Praxis besonders bewährt. So ist mit solchen Maschinen ein besonders genaues Bearbeitungsergebnis erreichbar. Es sind aber bei der Erfindung selbstverständlich auch andere Maschinenausgestaltungen denkbar.

Nach einer weiteren Ausgestaltung kann der Antriebsmotor ein Elektromotor sein und zur Ermittlung des Drehmoments der dem Antriebsmotor zugeführte Strom gemessen werden. Bei dieser Ausgestaltung wird die Leistungsaufnahme des Motors gemessen. Die Drehmomentmessung ist auf diese Weise besonders einfach.

Die erfindungsgemäße Vorrichtung kann zur Durchführung des erfindungsgemäßen Verfahrens ausgebildet sein.

Ein Ausführungsbeispiel der Erfindung wird nachfolgend anhand von Figuren näher erläutert. Es zeigen schematisch:
- Fig. 1: einen grundsätzlichen Aufbau einer Doppelseitenschleifmaschine,
- Fig. 2: eine Darstellung einer erfindungsgemäßen Doppelseitenschleif- maschine,
- Fig. 3: ein Diagramm zur Veranschaulichung des erfindungsgemäßen Verfahrens, und
- Fig. 4: ein weiteres Diagramm zur Veranschaulichung des erfindungsgemäßen Verfahrens.

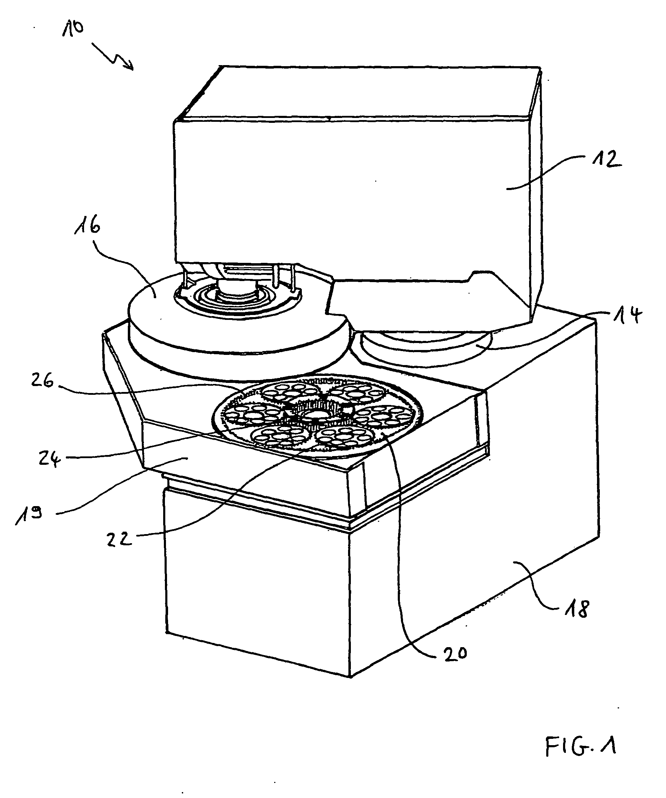

Soweit nichts anderes angegeben ist, bezeichnen in den Figuren gleiche Bezugszeichen gleiche Gegenstände. In Figur 1 ist der grundsätzliche Aufbau einer Doppelseitenbearbeitungsmaschine 10, vorliegend einer Doppelseitenschleifmaschine 10 mit Planetenkinematik, gezeigt. Die Doppelseitenschleifmaschine 10 weist einen oberen Schwenkarm 12 auf, der über eine an einem unteren Sockel 18 gelagerte Schwenkeinrichtung 14 um eine vertikale Achse geschwenkt werden kann. An dem Schwenkarm 12 wird eine obere Arbeitsscheibe 16 getragen. Die obere Arbeitsscheibe 16 ist über einen in Figur 1 nicht näher dargestellten Antriebsmotor drehend antreibbar. An ihrer in Figur 1 nicht dargestellten Unterseite besitzt die Arbeitsscheibe 16 eine durch einen Schleifbelag gebildete Arbeitsfläche. Der untere Sockel 18 weist einen Trägerabschnitt 19 auf, der eine untere Arbeitsscheibe 20 trägt, die an ihrer Oberseite eine entsprechende durch einen Schleifbelag gebildete Arbeitsfläche besitzt. Die untere Arbeitsscheibe 20 ist ebenfalls über einen nicht dargestellten Antriebsmotor drehend antreibbar, insbesondere gegenläufig zu der oberen Scheibe 16. Auf der unteren Arbeitsscheibe 20 sind mehrere Läuferscheiben 22 angeordnet, die jeweils Ausnehmungen für zu bearbeitende Werkstücke, vorliegend zu schleifende Halbleiterscheiben, aufweisen. Die Läuferscheiben 22 greifen jeweils mit einer Außenverzahnung in einen Innenstiftkranz 24 und einen Außenstiftkranz 26 ein. Auf diese Weise wird eine Abwälzvorrichtung gebildet, wobei die Läuferscheiben 22 bei einer Rotation der unteren Arbeitsscheibe 20 über den Innenstiftkranz 24 ebenfalls in Rotation versetzt werden. Die in den Ausnehmungen der Läuferscheiben 22 angeordneten Werkstücke bewegen sich dann auf der unteren Arbeitsscheibe 20 entlang einer zykloidischen Bahn.

Zur Bearbeitung werden die zu bearbeitenden Werkstücke in die Läuferscheiben 22 eingelegt (nicht dargestellt). Durch Verschwenken des Schwenkarms 12 werden die beiden Arbeitsscheiben 16, 20 koaxial zueinander ausgerichtet. Sie bilden dann zwischen sich einen Arbeitsspalt. Bei mindestens einer rotierenden oberen oder unteren Arbeitsscheibe 16, 20 wird anschließend beispielsweise die obere Arbeitsscheibe 16 mit einer Anpresskraft auf die Werkstücke gepresst. Dazu ist in dem Schwenkarm 12 ein hochgenaues Belastungssystem angeordnet. Es wirkt dann von der oberen und der unteren Arbeitsscheibe 16, 20 jeweils eine Anpresskraft auf die zu bearbeitenden Werkstücke und diese werden beidseitig bearbeitet, in dem dargestellten Beispiel geschliffen. Der Aufbau und die Funktion einer derartigen Doppelseitenbearbeitungsmaschine sind dem Fachmann an sich bekannt.

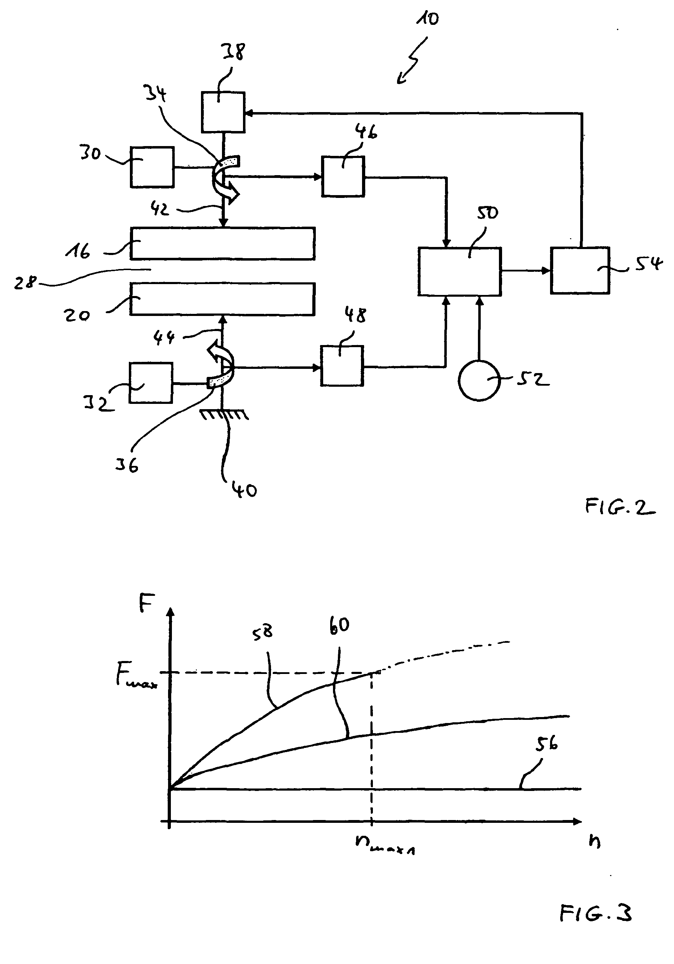

In Figur 2 ist schematisch der Aufbau einer erfindungsgemäßen Doppelseitenschleifmaschine 10 gezeigt. Zu erkennen sind die beiden Arbeitsscheiben 16, 20, die zwischen sich einen Arbeitsspalt 28 bilden. In diesem Arbeitsspalt 28 werden die Werkstücke bearbeitet. Die obere und untere Arbeitsscheibe 16, 20 werden über einen oberen Antriebsmotor 30 und einen unteren Antriebsmotor 32 in Rotation versetzt, wie schematisch durch die Pfeile 34, 36 angedeutet. Bei den Antriebsmotoren 30, 32 handelt es sich bei dem dargestellten Beispiel um Elektromotoren 30, 32. Mittels einer oberen Anpresseinrichtung 38 wird die Arbeitsscheibe 16 von oben auf die in dem Arbeitsspalt 28 zu bearbeitenden Werkstücke gepresst. Die untere Arbeitsscheibe 20 ist auf dem Untergrund abgestützt, wie bei dem Bezugszeichen 40 veranschaulicht. Die Werkstücke sind ohne eigene Einspannung in dem Arbeitsspalt 28 geführt. Daher führt die von der oberen Arbeitsscheibe von oben auf die Werkstücke ausgeübte Anpresskraft zu einer etwa gleichgroßen, von der unteren Arbeitsscheibe von unten ausgeübten Gegenkraft. Die von den Arbeitsscheiben 16, 20 ausgeübten oberen und unteren Anpresskräfte sind in Fig. 2 durch die Pfeile 42, 44 veranschaulicht.

Die Maschine 10 weist weiterhin eine obere Messeinrichtung 46 und eine untere Messeinrichtung 48 auf. Die obere Messeinrichtung 46 misst das von dem oberen Antriebsmotor 30 aufgebrachte Drehmoment. Die untere Messeinrichtung 48 misst das von dem unteren Antriebsmotor 32 aufgebrachte Drehmoment. Das Drehmoment wird dabei gemessen, indem die Leistungsaufnahme der Elektromotoren 30, 32 ermittelt wird. In dem dargestellten Beispiel erfolgt dies durch eine Messung des den Motoren 30, 32 zugeführten Stroms. Die Messwerte der Messeinrichtungen 46, 48 werden einer Vergleichseinrichtung 50 zugeführt. An der Vergleichseinrichtung 50 liegt außerdem ein Sollwert 52 für das von den Motoren 30, 32 aufzubringende Drehmoment an. In dem dargestellten Beispiel wird ein gemeinsamer Sollwert 52 für beide Motoren 30, 32 vorgegeben. Die Vergleichseinrichtung vergleicht die von den Messeinrichtungen 46, 48 gemessenen Drehmomentwerte mit dem Sollwert 52. Das Ergebnis dieses Vergleichs wird einer Regeleinrichtung 54 zugeführt. Sofern zwischen den von den Messeinrichtungen 46, 48 gemessenen Drehmomenten und dem Solldrehmoment 52 eine signifikante Abweichung besteht, wird von der Regeleinrichtung 54 die obere Anpresseinrichtung 38, und damit die Anpresskraft der Arbeitsscheiben 16, 20, so angesteuert, dass das bzw. die abweichenden Drehmomente wieder den Solldrehmomentswert annehmen. Es ist auch möglich, der Regelung beispielsweise den Mittelwert oder die Summe der von den Messeinrichtungen 46, 48 gemessenen Drehmomentwerte als Ist-Wert zugrunde zu legen.

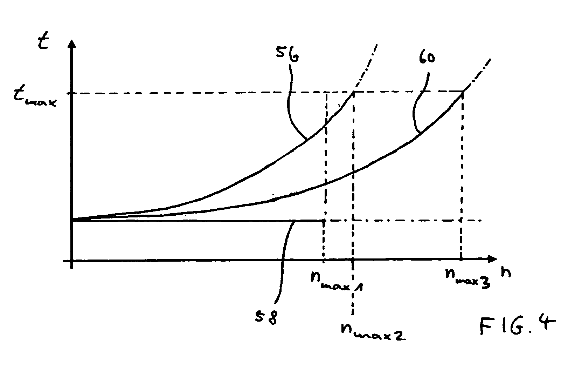

Die Figuren 3 und 4 veranschaulichen das erfindungsgemäße Verfahren gegenüber dem Stand der Technik. In Figur 3 ist die Anpresskraft F über der Anzahl n der mit einem Satz Arbeitsscheiben bzw. Schleifbeläge durchgeführten Schleifvorgänge aufgetragen. In Figur 4 ist wiederum über der Anzahl n der mit einem Satz Arbeitsscheiben bzw. Schleifbeläge durchgeführten Schleifvorgänge die Bearbeitungsdauer t zum Erreichen eines bestimmten Materialabtrags eines vorgegebenen Werkstücks bei ansonsten gleichen Bearbeitungsbedingungen aufgetragen.

Wie eingangs erläutert, ist es aus dem Stand der Technik zum einen bekannt, die Anpresskraft F über die Dauer der mit einem Satz Arbeitsscheiben bzw. Arbeitsbeläge durchgeführten Schleifvorgänge konstant zu halten. Dies ist in Figur 3 durch die Kurve 56 dargestellt. Natürlich verlängert sich bei dieser Vorgehensweise aufgrund des Verschleißes der Schleifbeläge die Bearbeitungszeit pro Werkstück mit der Betriebsdauer bei ansonsten gleichen Bearbeitungsparametern. Dies ist in Figur 4 ebenfalls durch die Kurve 56 dargestellt. Sobald eine maximale Bearbeitungsdauer tₘₐₓ erreicht ist, die nicht mehr akzeptabel ist, müssen die Schleifbeläge geschärft bzw. ausgetauscht werden. Dies stellt die Begrenzung für die Kurve 56 in Figur 4 dar. Andererseits ist es, wie ebenfalls eingangs erläutert, bekannt, die Anpresskraft F mit der Anzahl der Bearbeitungsvorgänge n zu erhöhen, um auf diese Weise die Bearbeitungsdauer pro Werkstück unabhängig von der Anzahl der mit den Werkzeugen bereits durchgeführten Bearbeitungsvorgänge konstant zu halten. Dies ist in den Figuren 3 und 4 durch die Kurve 58 gezeigt. Die Begrenzung dieser Vorgehensweise bildet eine maximale Anpresskraft Fₘₐₓ, welche dadurch gekennzeichnet ist, dass bei dieser Kraft das Drehmoment der Antriebe nicht mehr ausreichend ist, um die Arbeitsscheiben anzutreiben, oder die Maschine keine höhere Anpresskraft aufzubringen vermag. In Figur 3 ist die dadurch definierte maximale Anpresskraft Fₘₐₓ gezeigt. Entsprechend ergibt sich bei dieser Vorgehensweise eine maximale Anzahl nₘₐₓ₁ der mit einem Satz Arbeitsscheiben durchzuführenden Bearbeitungsvorgänge. Die entsprechende maximale Anzahl nₘₐₓ₂ der Bearbeitungsvorgänge bei der zuvor beschriebenen Arbeitsweise, bei der die Anpresskraft konstant gehalten wird, kann je nach gewählten Prozessparametern beispielsweise unter- oder oberhalb von nₘₐₓ₁ liegen. Dies ist in Figur 4 beispielhaft dargestellt.

Die erfindungsgemäße Regelung führt dagegen zu einer anderen Kurve, wie sie in den Figuren 3 und 4 bei dem Bezugzeichen 60 dargestellt ist. Es ist zu erkennen, dass die Kurve 60 jeweils zwischen den Kurven 58 und 56 liegt. Bei der erfindungsgemäßen Regelung steigt entsprechend die Anpresskraft F ebenfalls mit der Anzahl n der Bearbeitungsvorgänge an. Der Anstieg ist jedoch weniger steil als bei der Kurve 58. Wird erfindungsgemäß auf ein konstantes Motordrehmoment geregelt, wird die maximale Anpresskraft Fₘₐₓ niemals erreicht. Allerdings wird auch erfindungsgemäß nach einer entsprechenden Bearbeitungsdauer die akzeptable maximale Bearbeitungsdauer tₘₐₓ pro Werkstück erreicht. Dies geschieht erfindungsgemäß jedoch erst bei einer erheblich höheren Anzahl nₘₐₓ₃ von Bearbeitungsvorgängen mit den Arbeitsscheiben, als beim Stand der Technik. Dies ist in Figur 4 zu erkennen. Der Verschleiß der Arbeitsscheiben 16, 20 bzw. ihrer Arbeitsbeläge ist bei dem erfindungsgemäßen Verfahren geringer als beim Stand der Technik. Entsprechend können mit einem Satz Arbeitsbeläge mehr Werkstücke bearbeitet werden, wobei gleichzeitig eine akzeptable Bearbeitungsdauer beibehalten wird.

## Patentansprüche

1. Verfahren zum Betreiben einer Doppelseitenschleifmaschine zum Schleifen flacher Werkstücke, mit einer oberen und einer unteren Arbeitsscheibe (16, 20), die jeweils eine Arbeitsfläche mit einem Schleifbelag aufweisen, wobei zwischen den Arbeitsflächen ein Arbeitsspalt (28) gebildet ist, in dem die Werkstücke geschliffen werden, umfassend die Schritte:
- mindestens eine der Arbeitsscheiben (16, 20) wird über mindestens einen Antriebsmotor (30, 32) drehend angetrieben,
- in dem Arbeitsspalt (28) geführte Werkstücke werden durch die Schleifbeläge geschliffen, wobei von den Arbeitsscheiben (16, 20) eine Anpresskraft (F) auf die Werkstücke ausgeübt wird,
**dadurch gekennzeichnet, dass** während des Schleifvorgangs das von dem Antriebsmotor (30, 32) aufgebrachte Drehmoment gemessen und mit einem Solldrehmoment (52) verglichen wird, und dass bei einer Abweichung des gemessenen Drehmoments von dem Solldrehmoment (52) die Anpresskraft (F) so eingestellt wird, dass das gemessene Drehmoment das Solldrehmoment (52) annimmt.

2. Verfahren nach dem vorhergehenden Anspruch, **dadurch gekennzeichnet, dass** in dem Arbeitsspalt (28) mehrere Läuferscheiben (22) angeordnet sind, die in Ausnehmungen Werkstücke aufnehmen und mittels einer Abwälzvorrichtung (24, 26) in Rotation versetzt werden, wodurch die Läuferscheiben (22) und damit die in ihnen aufgenommenen Werkstücke sich in dem Arbeitsspalt (28) entlang einer zykloidischen Bahn bewegen.

3. Verfahren nach einem der vorhergehenden Ansprüche, **dadurch gekennzeichnet, dass** der Antriebsmotor (30, 32) ein Elektromotor ist und zur Ermittlung des Drehmoments der dem Antriebsmotor (30, 32) zugeführte Strom gemessen wird.

4. Doppelseitenschleifmaschine zum Schleifen flacher Werkstücke,
- mit einer oberen und einer unteren Arbeitsscheibe (16, 20), die jeweils eine Arbeitsfläche mit einem Schleifbelag aufweisen, wobei zwischen den Arbeitsflächen ein Arbeitsspalt (28) gebildet ist, in dem Werkstücke geschliffen werden können,
- mit mindestens einem Antriebsmotor (30, 32), mit dem mindestens eine der Arbeitsscheiben (16, 20) drehend antreibbar ist,
- mit einer Einrichtung zum Führen der Werkstücke in dem Arbeitsspalt (28), und
- mit mindestens einer Anpresseinrichtung (38), mit der von den Arbeitsscheiben (16, 20) eine Anpresskraft (F) auf die Werkstücke ausgeübt werden kann,
**gekennzeichnet durch**
- mindestens eine Messeinrichtung (46, 48), mit der während des Schleifvorgangs das von dem Antriebsmotor (30, 32) aufgebrachte Drehmoment gemessen wird,
- mindestens eine Vergleichseinrichtung (50), mit der das gemessene Drehmoment mit einem Solldrehmoment (52) verglichen werden kann, und
- mindestens eine Regeleinrichtung (54), mit der bei einer Abweichung des gemessenen Drehmoments von dem Solldrehmoment (52) die Anpresskraft (F) so eingestellt werden kann, dass das gemessene Drehmoment das Solldrehmoment (52) annimmt.

5. Doppelseitenschleifmaschine nach Anspruch 4, **dadurch gekennzeichnet, dass** die Einrichtung zum Führen der Werkstücke mehrere in dem Arbeitsspalt (28) angeordnete Läuferscheiben (22) aufweist, die in Ausnehmungen Werkstücke aufnehmen und mittels einer Abwälzvorrichtung (24, 26) in Rotation versetzt werden können, wodurch die Läuferscheiben (22) und damit die in ihnen aufgenommenen Werkstücke sich in dem Arbeitsspalt (28) entlang einer zykloidischen Bahn bewegen.

6. Doppelseitenschleifmaschine nach einem der Ansprüche 4 oder 5, **dadurch gekennzeichnet, dass** der Antriebsmotor (30, 32) ein Elektromotor ist und mit der Messeinrichtung (46, 48) zur Ermittlung des Drehmoments der dem Antriebsmotor (30, 32) zugeführte Strom gemessen werden kann.

## Claims

1. A method for operating a double-sided grinding machine for grinding flat workpieces, with an upper and a lower work disk (16, 20), each of which has a work surface with a grinding layer, wherein a work gap (28) is formed between the work surfaces, in which the workpieces are ground, comprising the steps:
- at least one of the work disks (16, 20) is driven rotatingly via at least one drive motor (30, 32),
- workpieces guided in the work gap (28) are ground by the grinding layers, wherein a contact force (F) is exerted on the workpieces by the work disks (16, 20),
**characterized in that** during the grinding process the torque applied by the drive motor (30, 32) is measured and compared with a target torque (52) and **in that** in the case of a deviation from the measured torque from the target torque (52) the contact force (F) is set such that the measured torque assumes the target torque (52).

2. The method according to the previous claim, **characterized in that** several rotor disks (22) are arranged in the work gap (28), which receive workpieces in recesses and are set in rotation by means of a rolling device (24, 26), whereby the rotor disks (22) and thus the workpieces received in them move in the work gap (28) along a cycloid path.

3. The method according to one of the previous claims, **characterized in that** the drive motor (30, 32) is an electric motor and the power fed to the drive motor (30, 32) is measured to determine the torque.

4. A double-sided grinding machine for grinding flat workpieces,
- with an upper and a lower work disk (16, 20), each of which has a work surface with a grinding layer, wherein a work gap (28) is formed between the work surfaces, in which workpieces can be ground,
- with at least one drive motor (30, 32), with which at least one of the work disks (16, 20) is rotatingly drivable,
- with a device for guiding the workpieces in the work gap (28) and
- with at least one pressing device (38), with which a contact force (F) can be exerted on the workpieces by the work disks (16, 20),
**characterized by**
- at least one measuring device (46, 48), with which the torque applied by the drive motor (30, 32) is measured during the grinding process,
- at least one comparing device (50), with which the measured torque can be compared with a target torque (52) and
- at least one control device (54), with which, in the case of a deviation of the measured torque from the target torque (52), the contact force (F) can be set such that the measured torque assumes the target torque (52).

5. The double-sided grinding machine according to claim 4, **characterized in that** the device for guiding the workpieces has several rotor disks (22) arranged in the work gap (28), which receive workpieces in recesses and can be set in rotation by means of a rolling device (24, 26), wherein the rotor disks (22) and thus the workpieces received in them move in the work gap (28) along a cycloid path.

6. The double-sided grinding machine according to one of claims 4 or 5, **characterized in that** the drive motor (30, 32) is an electric motor and the power fed to the drive motor (30, 32) can be measured with the measuring device (46, 48) for determining the torque.

## Revendications

1. Procédé destiné au fonctionnement d'une meuleuse à double face pour le meulage de pièces plates, comprenant un disque de travail supérieur et un disque de travail inférieur (16, 20) présentant respectivement une surface de travail avec un revêtement de meulage, une fente de travail (28) étant formée entre les surfaces de travail, dans laquelle les pièces sont meulées, comprenant les étapes suivantes :
- au moins un des disques de travail (16, 20) est entraîné en rotation par au moins un moteur de commande (30, 32),
- les pièces guidées dans la fente de travail (28) sont meulées par les revêtements de meulage, les disques de travail (16, 20) exerçant une force de pression (F) sur les pièces,
**caractérisé en ce que** le couple de rotation appliqué pendant le processus de meulage par le moteur de commande (30, 32) est mesuré et est comparé à un couple théorique (52), et **en ce qu'**en cas d'écart du couple de rotation mesuré par rapport au couple de rotation théorique (52), la force de pression (F) est ajustée de telle manière que le couple de rotation mesuré absorbe le couple de rotation théorique (52).

2. Procédé selon la revendication précédente, **caractérisé en ce que** plusieurs disques de rotor (22) sont disposés dans la fente de travail (28) qui reçoivent des pièces dans des évidements et sont déplacés en rotation au moyen d'un dispositif de roulement (24, 26), les disques de rotor (22) et les pièces logées dans ceux-ci se déplaçant dans la fente de travail (28) le long d'une bande cycloïdale.

3. Procédé selon une des revendications précédentes, **caractérisé en ce que** le moteur de commande (30, 32) est un moteur électrique, et pour déterminer le couple, le courant qui alimente le moteur de commande (30, 32) est mesuré.

4. Meuleuse à double face pour le meulage de pièces plates, comprenant
- un disque de travail supérieur et un disque de travail inférieur (16, 20) présentant respectivement une surface de travail avec un revêtement de meulage, une fente de travail (28) étant formée entre les surfaces de travail, dans laquelle les pièces peuvent être meulées,
- au moins un moteur de commande (30, 32) qui permet d'entraîner en rotation au moins un des disques de travail (16, 20),
- un dispositif de guidage des pièces dans la fente de travail (28), et
- au moins un dispositif de pression (38), qui permet d'exercer par les disques de travail (16, 20) une force de pression (F) sur les pièces,
**caractérisée par**
- au moins un dispositif de mesure (46, 48) qui permet de mesurer pendant le processus de meulage le couple appliqué par le moteur de commande (30, 32),
- au moins un dispositif de comparaison (50) qui permet de comparer le couple mesuré à un couple théorique (52), et
- au moins un dispositif de régulation (54) qui permet de réguler la force de pression (F), en cas d'écart du couple mesuré par rapport au couple théorique (52), de telle sorte que le couple mesuré absorbe le couple théorique (52).

5. Meuleuse à double face selon la revendication 4, **caractérisée en ce que** le dispositif de guidage des pièces comprend plusieurs disques de rotor (22) disposés dans la fente de travail (28) qui reçoivent des pièces dans des évidements et peuvent être déplacés en rotation au moyen d'un dispositif de roulement (24, 26), les disques de rotor (22) et les pièces logées dans ceux-ci se déplaçant dans la fente de travail (28) le long d'une bande cycloïdale.

6. Meuleuse à double face selon une des revendications 4 ou 5, **caractérisée en ce que** le moteur de commande (30, 32) est un moteur électrique, et pour déterminer le couple, le courant qui alimente le moteur de commande (30, 32) peut être mesuré avec le dispositif de mesure (46, 48).
